# EUROPÄISCHE PATENTSCHRIFT

(11) **EP 3 172 039 B1**
(45) Veröffentlichungstag und Bekanntmachung des Hinweises auf die Patenterteilung: **05.01.2022**
(21) Anmeldenummer: 15756338.8
(22) Anmeldetag: 14.07.2015
(51) Int. Cl.: B22F 10/00, B22F 12/00, B29C 67/00, B33Y 30/00, B33Y 10/00, B29C 64/106, B29C 64/118, B29C 64/227

(54) **VORRICHTUNG FÜR DREIDIMENSIONALE ADDITIVE DRUCKOPERATIONEN INSBESONDERE FÜR GROSSVOLUMIGE BAUTEILE, INSBESONDERE NACH DEM VERFAHREN DES FUSED DEPOSITION MOLDING (FDM)**
DEVICE FOR THREE-DIMENSIONAL ADDITIVE PRINTING OPERATIONS, IN PARTICULAR FOR LARGE-VOLUME COMPONENTS, IN PARTICULAR ACCORDING TO THE METHOD OF FUSED DEPOSITION MOLDING (FDM)
DISPOSITIF POUR OPÉRATIONS D'IMPRESSION ADDITIVE TRIDIMENSIONNELLE EN PARTICULIER POUR DES PIÈCES DE GRAND VOLUME, EN PARTICULIER SELON LE PROCÉDÉ DE LA MODÉLISATION PAR DÉPÔT DE FIL EN FUSION (FDM)

(30) Priorität: 25.07.2014 DE 102014011230
(43) Veröffentlichungstag der Anmeldung: 31.05.2017
(73) Patentinhaber: Technische Universität Dortmund, 44227 Dortmund (DE)
(72) Erfinder: KÜNNE, Bernd, 59494 Soest (DE); KRAUTWALD, Tim, 59425 Unna (DE); WIßUWA, Manuel, 44269 Dortmund (DE)
(74) Vertreter: Schneider, Uwe
(86) Internationale Anmeldenummer: PCT/DE2015/000363
(87) Internationale Veröffentlichungsnummer: WO 2016/011995

(56) Entgegenhaltungen:
- WO-A1-2014/092651
- WO-A1-2015/008669
- CN-A- 103 431 925
- US-A1- 2005 017 411
- US-A1- 2013 189 435
- None

## Beschreibung

Die Erfindung betrifft eine Vorrichtung für dreidimensionale additive Druckoperationen insbesondere für großvolumige Bauteile, insbesondere nach dem Verfahren des Fused Deposition Molding (FDM) gemäß Oberbegriff des Anspruches 1.

Die sich momentan sehr dynamisch weiter entwickelnden sog. 3-D-Druckverfahren bieten die Möglichkeit, mittels unterschiedlicher Techniken und Materialien Werkstücke auf additive Weise herzustellen und erlauben damit völlig neue Ansätze und Gestaltungsmöglichkeiten zur Herstellung von Bauteilen auch in Kleinserien. Hierbei kommen sehr unterschiedliche Techniken und Materialien zum Einsatz, um das Werkstück aus z.B. pulverförmigen oder strangförmigen Vormaterialien punkt-, schicht- oder lagenweise aufzubauen. Hierbei bewegt sich in der Regel ein Bearbeitungskopf entlang der herzustellenden Werkstückkontur und beeinflusst dabei das Vormaterial punktuell derart, dass es die gewünschte Form des Werkstücks in diesem Punkt annimmt und anschließend beibehält. Der Bearbeitungskopf muss dabei teilweise komplizierte geometrische Muster abarbeiten, wozu aufgrund der Bewegungskinematik des 3-D-Druckers teilweise sehr zeitaufwändige Bearbeitungsoperationen notwendig sind. Daher liegt der Focus des 3-D-Drucks derzeit auf der Herstellung von Werkstücken als Einzelstücke und Kleinserien, insbesondere im Bereich des Rapid-Prototyping. Auch ist bei für den Endanwender vertretbaren Investitionssummen für 3-D-Drucker in der Regel der zur Verfügung stehende Arbeitsraum der 3-D-Drucker und damit auch die Größe der derart herzustellenden Bauteile eng begrenzt.

Bei dem sog. FDM-Verfahren (FDM - Fused Deposition Molding) werden Bahnen und Schichten eines pastenförmigen Materials (z.B. aufgeschmolzene Polymere oder sonstige Kunststoffe) schichtweise aufgebracht. Die angetriebenen Achsen des 3-D-Druckers bewegen die Düse zur Abgabe des pastenförmigen Materials dabei entlang der frei wählbaren Bauteilgeometrie, sodass nach Beendigung des Prozesses das nahezu nachbearbeitungsfreie Bauteil zur Verfügung steht. Die Schichtdicke des aufgetragenen Materials liegt üblicherweise in einem Bereich von einem bzw. wenigen Zehnteln Millimeter Dicke. Durch die geringen Anforderungen an das Ausgangsmaterial können verschiedenste Thermoplaste mit unterschiedlichen Eigenschaften eingesetzt werden. So sind beispielsweise elastische, biologisch abbaubare, fluoreszierende, leitfähige, lösliche oder tribologisch verbesserte Materialien einsetzbar und bereits verfügbar. Neben der frei wählbaren Geometrie können durch den Einsatz dieser Materialien Komponenten mit höchster Funktionsintegration in einem Arbeitsgang vollautomatisch hergestellt werden. Ein weiterer Vorteil, der das FDM-Verfahren weiter von anderen etablierten Verfahren des 3D-Drucks wie dem SLM-Verfahren (Selective-Laser-Melting) abgrenzt, ist die Einbringung von Leichtbaustrukturen in geschlossenen Körpern. Da kein Pulver wie beim SLM-Verfahren eingeschlossen wird, können beispielsweise mechanisch belastete Strukturen als Hohlkörper mit innenliegender Leichtbaustruktur (z.B. biologisch inspirierter Wabenstruktur) ausgeführt werden. Das Verfahren eignet sich daher ideal für Leichtbauanwendungen bzw. ermöglicht erhebliche Materialeinsparungen bei großvolumigen Strukturen. Vorteile sind insbesondere die geringe Vorbereitungszeit, die extrem geringen Anschaffungs- und Betriebskosten, das große Materialspektrum und der einfache Umgang mit dem Verfahren. Nachteile sind insbesondere die erforderliche Stützstruktur (z.B. Überhänge) und die niedrigere Oberflächenqualität im Vergleich zum SLM-Verfahren.

Die verfügbaren FDM-Systeme sind aber nicht in der Lage, die genannten Vorteile des eigentlichen Herstellverfahrens voll auszunutzen. Für einen wirtschaftlicheren Einsatz ist insbesondere die Produktionsgeschwindigkeit zu gering, da stets nur eine Düse mit vergleichsweise geringer Auftragsleistung eingesetzt wird. Eine Optimierung mit nur einer einzelnen Düse ist jedoch stark limitiert, da bei Vergrößerung des Durchmessers der Düse zur Durchsatzsteigerung die Detailgenauigkeit und Oberflächenqualität erheblich reduziert wird. Das Unternehmen Stratasys bietet den derzeit größten industriell einsetzbaren 3D-Drucker an, der nach dem FDM-Verfahren arbeitet. Der Fortus 900mc verwendet eine einzelne Düse, um die geschmolzenen Thermoplaste aufzubringen.

Weitere 3-D-Druckverfahren, insbesondere zur Herstellung auch größervolumiger Bauteile, sind das schon erwähnte Selektive Laserschmelzen (SLM-Verfahren) und das Polyjet-Verfahren.

Beim SLM-Verfahren werden dünne Lagen eines Pulvers vollflächig auf die Druckoberfläche aufgetragen und mit einem gesteuerten Laser örtlich selektiv aufgeschmolzen. Schichtweise entsteht so an den aufgeschmolzenen Positionen das fertige Bauteil. Eines der hier führenden Produkte ist z.B. der 3-D-Drucker EOSINT P 800 der Firma EOS.

Beim Polyjet-Verfahren werden dünne Schichten eines UV-aushärtenden flüssigen Polymers aufgetragen. Dies geschieht gesteuert lediglich an den Positionen, an denen entsprechend des Modells Material vorhanden ist. Eines der hier führenden Produkte ist z.B. der 3-D-Drucker Objet1000 der Firma Stratasys.

Es sind neben den beiden beschriebenen Gruppen noch weitere Techniken aus dem Bereich des Rapid-Prototypings bekannt (z.B. Stereolithographie-Verfahren). Allerdings sind diese zur Fertigung großer Bauteile nach dem aktuellen Stand der Technik ungeeignet und nicht ohne erheblichen Aufwand bzw. sinnvoll skalierbar.

Von besonderer Bedeutung für die Wirtschaftlichkeit von 3-D-Druckverfahren ist neben der eigentlichen Bauteilerzeugung aus Vormaterial die Art, wie die Bauteilgeometrie im Zusammenspiel von Düse und Bewegungskinematik des 3-D-Druckers erzeugt wird.

Üblicherweise werden portalartig aufgebaute 3-D-Drucker verwendet, bei denen die Position des Druckkopfes relativ zum Werkstückträger mittels zweier Achsen in x- und y-Richtung verändert werden kann. Außerdem wird der Abstand zwischen dem Druckkopf und dem Werkstückträger mittels einer z-Achse so verändert, dass der Abstand zwischen dem Druckkopf und der obersten aufgedruckten Schicht möglichst konstant bleibt. Die relative Verfahrbewegung in x-, y- und z-Richtung kann entweder seitens des Werkstückträgers, seitens des Druckkopfes oder in einer beliebigen Kombination davon erfolgen. Nachteilig ist, dass insbesondere bei großen Werkstücken (z. B. 1,5 m × 1,5 m Grundfläche) der Druckkopf über lange Wege bewegt werden muss, was aufgrund der begrenzten Beschleunigungen und Verfahrgeschwindigkeiten lange Druckzeiten zur Folge hat.

Weiterhin bekannt sind entsprechende 3-D-Drucker mit Achsen in Polarkoordinaten, bei denen die eine Achse durch einen hin- und herdrehenden Drehtisch und die zweite Achse durch eine lineare, radial zum Drehtisch liegende Achse gebildet wird. Nachteilig sind auch hier die hohen Druckzeiten, da der Drehtisch insbesondere bei großen Werkstücken sowie die Werkstücke selbst ein hohes Massenträgheitsmoment haben, so dass nur kleine Winkelbeschleunigungen und kleine Winkelgeschwindigkeiten realisierbar sind. Außerdem sind entsprechende Drucker mit einem Drehtisch und einer darüber schwenkbaren (also nicht linearen) Achse bekannt, für die sinngemäß dasselbe gilt.

Nachteilig bei allen diesen 3D-Druckern nach dem Stand der Technik ist weiterhin, dass sie nur für relativ kleine Druckvolumina geeignet sind, so dass die Herstellung größerer Teile unwirtschaftlich wird. Würde ein einziger Druckkopf mit großem Materialausstoß eingesetzt werden, wäre das Drucken feinerer Konturen kaum möglich. Andererseits ist es nach dem Stand der Technik kaum möglich, mehrere, weitgehend unabhängig und gleichzeitig arbeitende Druckköpfe einzusetzen. Würden nämlich beispielsweise mehrere kleinere herkömmliche und voneinander unabhängig steuerbare Druckeinheiten mit kartesischen Koordinaten nebeneinander eingesetzt werden, würde in den Angrenzungsbereichen der einzelnen Druckeinheiten nur unvollständig gedruckt werden können, und es würden beispielsweise nachteilige Bindenähte in den Angrenzungsbereichen entstehen. Würden die Druckbereiche der mehreren einzelnen Drucker dagegen überlappend ausgeführt werden, wären aufwändige Kollisionskontrollen erforderlich, und die Anordnung wäre konstruktiv und steuerungstechnisch aufwändig.

Die CN 103431925 A zeigt den konventionellen portalartigen Aufbau bekannter 3D-Drucker mit zwei an einer Art Portalkonstruktion über einem Arbeitstisch befestigten und senkrecht zueinander ausgerichteten Linearachsen. Unter dieser Portalkonstruktion ist ein um eine Drehachse bewegbarer Werkstückauflagetisch angeordnet. Zusätzlich ist der Werkstückauflagetisch durch eine Art Scherengitterkonstruktion höhenverstellbar. Dieser 3D-Drucker ist zur Herstellung kleinvolumiger Gewebestrukturen organischer Art gedacht. Die US 2005/0017411 A1 zeigt hingegen eine kardanische Lagerung des Werkstücks zusammen mit einer dreiachsig linearen Relativbeweglichkeit zwischen Druckkopf und Werkstück.

Aufgabe der Erfindung ist es daher, eine Vorrichtung für dreidimensionale additive Druckoperationen insbesondere für großvolumige Bauteile aufweisend einen 3D-Druckers insbesondere für das FDM-Verfahren bereitzustellen, der in der Lage ist, auch und insbesondere großvolumige Bauteile bis z. B. 1,5 m × 1,5 m × 1,5 m Bauteilvolumen in vergleichsweise kurzer Zeit herstellen zu können.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einer Vorrichtung für dreidimensionale additive Druckoperationen insbesondere für großvolumige Bauteile, insbesondere nach dem Verfahren des Fused Deposition Molding (FDM), mit mindestens einem Druckkopf und einer Werkstückauflage. Eine derartige gattungsgemäße Vorrichtung wird dadurch in erfindungsgemäßer Weise weiter gebildet, dass die Werkstückauflage um mindestens eine Rotationsachse bewegbar ist und der mindestens eine Druckkopf entlang von zwei parallel zu der Ebene der Werkstückauflage liegender Achsen relativ zu der Werkstückauflage verfahrbar ist, wobei die erste Achse im wesentlichen radial zu der mindestens einen Rotationsachse der Werkstückauflage verläuft und die zweite Achse um die Rotationsachse der Werkstückauflage schwenkend wirkt. Hierdurch wird es möglich, zumindest wesentliche Bereiche des herzustellenden Bauteils überwiegend durch die Bewegung der Werkstückauflage um die mindestens eine Rotationsachse kinematisch abzubilden, so dass der mindestens eine Druckkopf abhängig von dem herzustellenden Bauteilquerschnitt im wesentlichen nur die Feinpositionierung des aufzutragenden Materials relativ zu der rotierenden Werkstückauflage übernehmen muss. Hierdurch werden die Verfahrwege des Druckkopfes wesentlich verringert und die Herstellung des Bauteils kann beschleunigt ablaufen. Die Feinpositionierung des mindestens einen Druckkopfes erfolgt dabei entlang von zwei parallel zu der Ebene der Werkstückauflage liegenden Achsen, so dass sich der mindestens eine Druckkopf quasi parallel und beabstandet zu der Werkstückauflage über der Werkstückauflage bewegen kann. Hierbei verläuft die erste Achse im wesentlichen radial zu der mindestens einen Rotationsachse der Werkstückauflage und die zweite Achse wirkt schwenkend um die Rotationsachse der Werkstückauflage.

Besonders vorteilhaft ist diese Anordnung bei großen und weitgehend rohrförmigen Bauteilen, bei denen nach dem Stand der Technik trotz einer vergleichsweise einfachen Querschnittsgeometrie ein relativ kompliziertes Abarbeiten der Bauteilgeometrie mit langen Verfahrwegen des Druckkopfes eingesetzt und aufgrund der häufigen Beschleunigungs- und Verzögerungsphasen sowie der bewegten Masse nur geringe Auftragsraten erzielt werden können. Hierbei erfolgen die großen Relativbewegungen zwischen Druckkopf und Werkstückauflage rotatorisch durch die Rotation der Werkstückauflage und die feinen Positionierbewegungen durch den Druckkopf entlang der beiden weiteren Achsen. Im einfachsten Fall eines kreisförmigen Querschnitts des herzustellenden Bauteils würde dann ähnlich wie bei einer Festplatte die Werkstückauflage die Rotationspositionierung des herzustellenden Bauteils relativ zu dem Druckkopf erzeugen und ebenfalls in Analogie zum Lesekopf einer Festplatte der Druckkopf nur zwischen den einzelnen kreisförmigen Bahnen entlang der Kontur des Bauteils schrittweise zugestellt werden. Bei komplexeren im wesentlichen rohrförmigen oder allgemein prismatischen Bauteilen werden sowohl Druckkopf als auch Werkstückauflage eine überlagerte Bewegung zur kinematischen Erzeugung der Ablagegeometrie des additiv sich überlagernden Bauteilmaterials ausführen.

In einer ersten vorteilhaften Ausgestaltung kann die relative radiale Bewegung der ersten Achse des Druckkopfs entweder kartesisch radial oder polar radial relativ zur Rotationsachse der Werkstückauflage ausgeführt werden. Da bei im wesentlichen rohrförmigen oder allgemein prismatischen Bauteilen die Grobgeometrie überwiegend durch die Rotationsbewegung der Werkstückauflage erzeugt werden kann, kann es vorteilhaft sein, anstelle einer bekannten kartesisch radialen Bewegung des Druckkopfes eine polar radiale Bewegung des Druckkopfes zu realisieren, da dann rechnerisch die Umsetzung der notwendigen Bewegungen des Druckkopfes in die Kinematik der Vorrichtung einfacher wird.

In einer anderen vorteilhaften Ausgestaltung ist es denkbar, dass der Druckkopf durch schwenkend um die Rotationsachse der Werkstückauflage relative Bewegung in Umfangsrichtung der Werkstückauflage zumindest abschnittsweise synchron zur Rotationsbewegung der Werkstückauflage mitführbar ist. Um bei Rotation der Werkstückaufnahme auch radiale Konturen drucken zu können ist es erforderlich, dass der mindestens eine Druckkopf zumindest abschnittsweise mit der Rotationsbewegung der Werkstückaufnahme mitgeführt werden. Daher wird zusätzlich zu der radial zur Werkstückaufnahme beweglichen Achse des Druckkopfes eine zusätzliche Schwenkachse verwendet. So ist es möglich, über einen definierten Drehwinkel der Werkstückaufnahme den Druckkopf in Tangentialrichtung mitzuführen und relativ zur Werkstückaufnahme nur radial zu verfahren.

Weiter sollte in einer anderen Ausgestaltung zwischen der Werkstückauflage und dem mindestens einen Druckkopf eine Relativbewegung ausführbar sein, durch die der Abstand im wesentlichen parallel zur Rotationsachse der Werkstückauflage zwischen Werkstückauflage und dem mindestens einen Druckkopf an den Bearbeitungsfortschritt des Druckvorgangs anpassbar ist. Hierdurch kann mit dem zunehmenden Aufbau des Bauteils aus den einzelnen Schichten oder Lagen der Abstand zwischen Druckkopf und Werkstückaufnahme jederzeit optimal eingestellt und an die sich ändernde Höhe des Bauteils angepasst werden. Hierbei ist es in weiterer Ausgestaltung denkbar, dass die Relativbewegung zwischen Druckkopf und Werkstückauflage im wesentlichen parallel zur Rotationsachse der Werkstückauflage kontinuierlich oder schrittweise ausführbar ist.

In einer besonders bevorzugten Ausgestaltung ist die Rotationsachse der Werkstückauflage senkrecht zu der Ebene der Werkstückauflage angeordnet. Hierdurch ergeben sich kinematisch und rechentechnisch einfach geometrische Beziehungen zwischen der Bewegung der Werkstückauflage und der Bewegung des Druckkopfs. Besonders bevorzugt ist es dabei, wenn die Rotationsachse durch den Mittelpunkt der, vorzugsweise kreisförmig berandeten, Werkstückauflage verläuft bzw. diese schneidet.

In weiterer Ausgestaltung kann die Werkstückauflage zusätzlich zu der Rotationsbewegung um eine Schwenkachse schwenkbar ausgestaltet werden, wobei die Schwenkachse vorzugsweise parallel zu der Ebene der Werkstückauflage angeordnet sein kann und weiter vorzugsweise die Rotationsachse der Werkstückauflage schneidet. Eine derartige Schwenkung der Werkstückauflage ist beispielsweise zur Herstellung von Bauteilen mit Bögen prismatischen Querschnittes vorteilhaft, da zusätzlich zu der Rotation der Werkstückauflage bei jeder Umdrehung der Werkstückauflage diese um einen kleinen Winkel um eine insbesondere waagerechte Schwenkachse geschwenkt werden kann. Der sich hierdurch während der Umdrehung verändernde Abstand zwischen Druckkopf und entstehendem Bauteil kann durch entsprechende Anpassung des Druckvolumens ausgeglichen werden (z.B. mit einem Druckspalt bei 0°-Stellung der Werkstückauflage von 0,1 mm, bei 180° von 0,8 mm; Ausgleich durch Anpassung der Drehzahl der Werkstückauflage oder Materialvorschub des Druckkopfs).

Weiterhin ist es denkbar, dass die Werkstückauflage zusätzlich relativ zu dem mindestens einen Druckkopf linear um mindestens eine, vorzugsweise zwei Achsen verfahrbar ist, die vorzugsweise im wesentlichen senkrecht zu der Rotationsachse der Werkstückauflage angeordnet sind. Diese zusätzliche Verfahrmöglichkeit entlang der linearen Achsen der Werkstückauflage bietet die Möglichkeit, das Bauteil relativ zum Druckkopf stets optimal zu positionieren, um unnötig lange Verfahrwege des mindestens einen Druckkopfes zu vermeiden. Dies ist insbesondere bei Vorliegen einer Neigung der Werkstückauflage durch den rotatorischen Freiheitsgrad um die vorstehend angegebene Schwenkachse erforderlich.

Besonders vorteilhaft ist es weiterhin, dass mehr als ein gleichzeitig arbeitender Druckkopf vorgesehen werden kann, durch die zeitgleich verschiedene Abschnitte des gleichen Bauteils oder zeitgleich ein oder mehrere weitere Bauteile erzeugbar sind, die zeitgleich auf der gleichen Werkstückauflage erzeugt werden. Wenn in dieser Anmeldung von dem mindestens einen Druckkopf die Rede ist, soll immer auch die Möglichkeit von mehr als einem Druckkopf als angesprochen und beinhaltet angesehen sein. Insbesondere bei der Herstellung größerer Wandstärken prismatischer Bauteile müsste dort nur ein einziger Druckkopf mehrere Bahnen nebeneinander, aber zeitlich nacheinander in der Ebene der Werkstückauflage erzeugen, was einen erheblichen Zeitaufwand zur Generierung der kompletten Schichten bedingt. Der gleichzeitige unabhängige Einsatz mehrerer Druckköpfe erlaubt es statt dessen, mehrere Bahnen des aufzutragenden Materials des Bauteils gleichzeitig nebeneinander oder zeitgleich benachbart zueinander zu erzeugen und damit zum Beispiel eine dickere Wandung des Bauteils aus nebeneinander liegenden Auftragszonen des aufzutragenden Materials und die parallele Ablage einzelner Materialstränge durch die Bahnen der beteiligten Druckköpfe innerhalb nur einer Rotation der Werkstückauflage zu erzeugen. Zwar ist es in Stand der Technik bekannt, mehrere Druckköpfe vorzusehen, doch werden diese Druckköpfe beim im Stand der Technik beschriebenen FDM-Verfahren nicht bzw. nur bedingt eingesetzt und stellen sich durch die i.d.R. kartesische Achsanordnung der Druckkopfbewegung als problematisch dar. Soll dagegen anstelle des Druckkopfs das Bauteil verfahren werden, so müssen bei großen Bauteilen ebenfalls große Massen beschleunigt und verzögert werden, was die Geschwindigkeit wiederum einschränkt.

Weiterhin ist es denkbar, dass zur Herstellung von im wesentlichen rohrförmigen oder allgemein vorwiegend prismatischen Bauteilen die Verfahrbewegungen der Vorrichtung in einer Art Rotationsmodus überwiegend von der Werkstückauflage ausführbar sind. Im Rotationsmodus wird der Druckkopf vorteilhaft entlang Polarkoordinaten verfahren und das Werkstück kann relativ zum Druckkopf eine kontinuierliche, relativ schnelle Rotation ausführen. Dadurch werden die vorstehend beschriebenen Vorteile und Vereinfachungen für derartige Bauteile genutzt, wobei bei größeren Abweichungen des Fertigteilquerschnittes des Bauteils von der Kreisform der Druckkopf zunehmende Positionierungsaufgaben beim Auftragen des Materials des Bauteils ausführen muss.

Allerdings ist es auch denkbar, dass zur Herstellung von nicht vornehmlich rohrförmigen Bauteilen und insbesondere von kleinvolumigen Bauteilen oder spezieller Bereiche rohrähnlicher Bauteile die Verfahrbewegungen der Vorrichtung in einer Art kartesischem Modus überwiegend von dem mindestens einen Druckkopf ausführbar sind, insbesondere auch bei stillstehender Werkstückauflage. Hierdurch können z.B. kleinere oder feinere Strukturen erzeugt werden, die sich nicht oder nur aufwändig durch die Rotationsbewegung der Werkstückauflage geometrisch erzeugen lassen würden.

In einer anderen Ausgestaltung ist es auch denkbar, dass zur Herstellung von Bauteilen mittels mehrerer gleichzeitig arbeitender Druckköpfe die Verfahrbewegungen der Vorrichtung in einer Art Oszillationsmodus der Werkstückauflage mit hin- und hergehender Rotationsbewegung ausführbar sind, um überlappende Abschnitte des Bauteils durch unterschiedliche Druckköpfe zu erzeugen. Hierzu führt die Werkstückauflage dann nicht mehr vorzugsweise länger dauernde Rotationsbewegungen wie im Rotationsmodus aus, sondern eher kürzere Hin- und Herbewegungen mit einer Art Oszillation um eine Nulllage, die besonders für die zeitgleiche Herstellung mehrerer kleinerer Bauteile oder Bauteilabschnitte auf der gleichen Werkstückauflage oder zur Herstellung von Überlappungen am Rand der Druckbereiche der einzelnen Druckköpfe genutzt werden kann, bei dem die Werkstückaufnahme hin und her gedreht werden muss.

In weiterer Ausgestaltung ist es denkbar, dass mindestens eine Schneideinheit, aufweisend ein oder mehrere schneidende und/oder spanhebende Werkzeuge, entsprechend der Bewegung des Druckkopfs so mit dem Druckkopf mitführbar, vorzugsweise an dem Druckkopf selbst angeordnet, ist, dass die Schneideinheit die Ränder des gedruckten Bereichs des Bauteils auf ein vorgebbares Maß beschneidet. Eine derartige Schneideinheit kann Messer, Meißel, Fräser oder auch eine Schleifeinheit aufweisen, die eine mit der Bewegung des Druckkopfs gekoppelte Bewegung ausführt und mit deren Hilfe der aufgedruckte Bereich einseitig oder beidseitig beschnitten oder ähnlich bearbeitet werden kann. Hierdurch lassen sich Maßhaltigkeit und Oberfläche des herzustellenden Bauteils positiv beeinflussen.

Weiterhin ist es denkbar, dass die Abmessungen von Werkstückauflage und Bewegungseinrichtungen der Vorrichtung eine Herstellung von großvolumigen Bauteilen bis zu Abmessungen von 1,5 m × 1,5 m × 1,5 m oder auch größer ermöglichen.

Eine besonders bevorzugte Ausführungsform der erfindungsgemäßen Vorrichtung zeigt die Zeichnung.

Es zeigen:
- Figur 1 -: eine sehr schematische Darstellung einer grundlegenden Ausgestaltung der erfindungsgemäßen Vorrichtung mit Angabe der notwendigen Bewegungsachsen,
- Figur 2 -: eine konstruktiv weitergehend durchgebildete Darstellung einer Vorrichtung gemäß Figur 1 mit einem radial linear und um die Rotationsachse der Werkstückauflage schwenkbar angeordneten Drucckopf bei der Herstellung eines im wesentlichen kreisförmigen Bauteilquerschnittes mit zwei radial abstehenden Vorsprüngen,
- Figur 3 -: eine andere Ausgestaltung der Vorrichtung gemäß Figur 2 mit einem weiteren parallel arbeitenden Druckkopf,
- Figur 4 -: eine weitere Ausgestaltung der Vorrichtung gemäß Figur 2 mit insgesamt drei parallel arbeitenden Druckköpfen,
- Figur 5 -: eine andere Ausgestaltung ,die nicht Teil der beanspruchten Erfindung ist, der Vorrichtung gemäß Figur 1 mit vier unabhängig kartesisch bewegbaren Druckköpfen zur Herstellung eines dickwandigen rohrförmigen Querschnittes eines Bauteils mit Aussparungen,
- Figur 6 -: eine andere Ausgestaltung ,die nicht Teil der beanspruchten Erfindung ist, der Vorrichtung gemäß Figur 1 mit einem Druckkopf zur Herstellung eines rechteckig prismatischen Bauteils durch Überlagerung der Rotationsbewegung der Werkstückauflage und der kartesischen Relativbewegung des Druckkopfes.

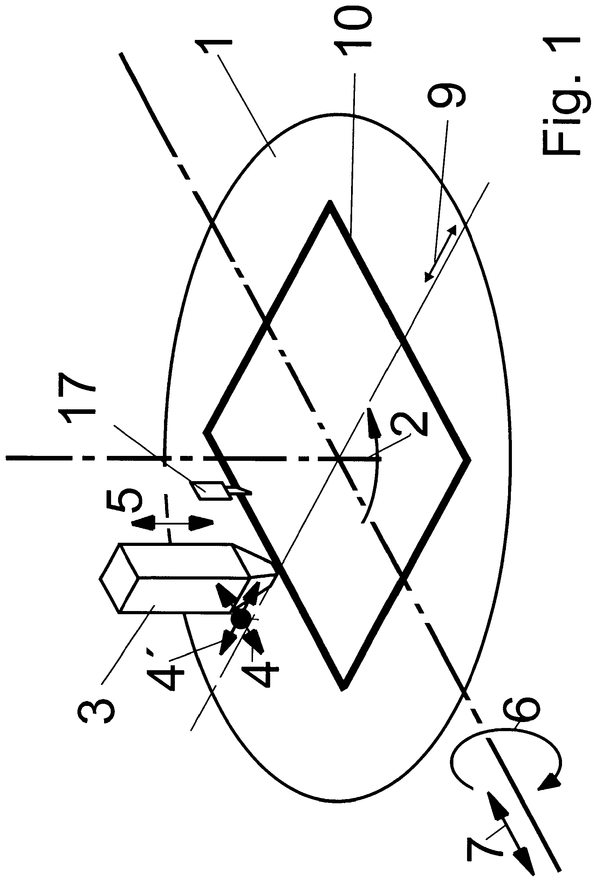

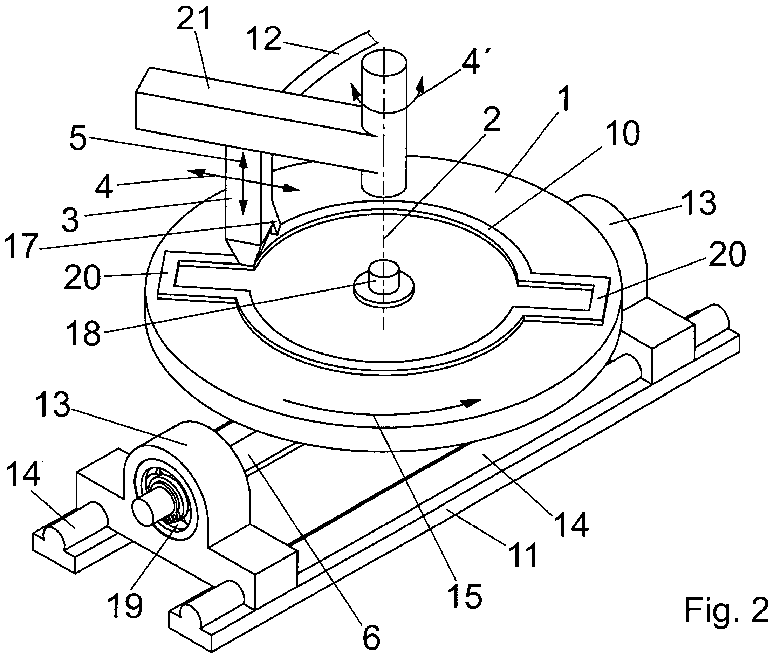

In der Figur 1 wird die vorliegende Erfindung anhand einer sehr schematischen Darstellung einer grundlegenden Ausgestaltung der erfindungsgemäßen Vorrichtung mit Angabe der notwendigen Bewegungsachsen erläutert, um die Grundprinzipien der Erfindung übersichtlich erläutern zu können. In den Figuren 2 bis 6 sind dann konstruktiv weitergehend durchgebildete Darstellungen von alternativen Vorrichtungen gemäß Figur 1 zu erkennen.

Die Figur 1 zeigt eine Werkstückauflage 1 z.B. in Form eines Drehtellers (beispielsweise etwa eine Glasplatte mit 1,5 m Durchmesser), wobei die Werkstückaufnahme 1 waagerecht angeordnet ist und ihre Drehachse 2 senkrecht steht. Weiter ist zu erkennen ein Druckkopf 3, der entlang zweier waagerechter, bevorzugt senkrecht zueinander angeordneter Achsen 4, 4' relativ zu der Werkstückauflage 1 durch entsprechende, nicht dargestellte Antriebe verfahren werden kann. Die Verfahrbewegung des Druckkopfes kann entweder wie in der Figur 1 dargestellt, aber nicht erfindungsgemäß, kartesisch weitgehend radial und tangential zur Drehachse 2 der Werkstückauflage 1 erfolgen, oder erfindungsgemäß wie in der Figur 2 zu erkennen polar radial zur Drehachse 2 und schwenkend um die Drehachse 2. Zusätzlich ist zwischen Werkstückauflage 1 und Druckkopf 3 eine Relativbewegung 5 axial zur Rotationsachse 2 der Werkstückauflage 1 möglich, um die sich mit jeder aufgedruckten Schicht des Materials des Bauteils 10 schrittweise oder kontinuierlich ändernde Werkstückhöhe des Bauteils 10 zu kompensieren.

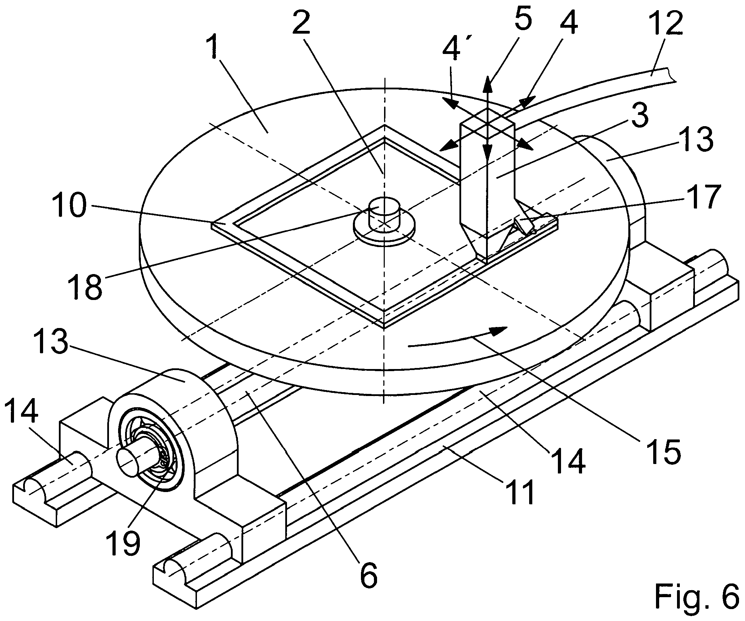

Mit dieser kinematischen Grundkonfiguration der Vorrichtung ist es möglich, zumindest wesentliche Bereiche des herzustellenden Bauteils 10 überwiegend durch die Bewegung der Werkstückauflage 1 um die mindestens eine Rotationsachse 2 derart kinematisch abzubilden, dass der mindestens eine Druckkopf 3 lediglich die Feinpositionierung des aufzutragenden Materials relativ zu der rotierenden Werkstückauflage 1 übernehmen muss. Hierdurch werden die Verfahrwege des Druckkopfes 3 wesentlich verringert und die Herstellung des Bauteils 10 kann beschleunigt ablaufen. Die Feinpositionierung des mindestens einen Druckkopfes 3 erfolgt dabei entlang der zwei parallel zu der Ebene der Werkstückauflage 1 liegenden Achsen 4 bzw. 4', so dass sich der mindestens eine Druckkopf 3 quasi parallel und beabstandet zu der Werkstückauflage 1 über der Werkstückauflage 1 bewegen kann. Hierbei kann nicht erfindungsgemäß die erste Achse 4 im wesentlichen radial zu der mindestens einen Rotationsachse 2 der Werkstückauflage 1 verlaufen und die zweite Achse 4' entweder im wesentlichen tangential zu der ersten Achse 4 verlaufen oder erfindungsgemäß um die Rotationsachse 2 der Werkstückauflage 1 schwenkend wirken, wie dies in der Figur 2 dargestellt ist. Im einfachsten Fall eines kreisförmigen Querschnitts des herzustellenden Bauteils 10 kann dann die Rotationspositionierung des herzustellenden Bauteils 10 relativ zu dem Druckkopf 3 weitgehend durch die Rotation der Werkstückauflage 1 erzeugt werden, so dass der Druckkopf 3 nur zwischen den einzelnen kreisförmigen Bahnen entlang der Kontur des Bauteils 10 schrittweise zugestellt werden. Bei komplexeren im wesentlichen rohrförmigen oder allgemein weitgehend prismatischen Bauteilen 10 wie in Figur 1 durch den rechteckigen Querschnitt des Bauteils 10 angedeutet oder auch in Figur 6 konstruktiver durchgebildet zu erkennen, werden in der Regel sowohl der Druckkopf 3 als auch Werkstückauflage 1 eine überlagerte Bewegung zur kinematischen Erzeugung der Ablagegeometrie des additiv sich überlagernden Bauteilmaterials des Bauteils 10 ausführen. Hierbei liegen abhängig vom Querschnitt des herzustellenden Bauteils 10 die größeren Bewegungsanteile bei der Rotation der Werkstückauflage 1.

Die Vorrichtung kann, wie in Figur 1 schematisch angedeutet und in Figur 2 genauer konstruktiv erkennbar, zusätzlich eine Schwenkeinheit 6 aufweisen, mit deren Hilfe die Werkstückauflage 1 um eine waagerechte Schwenkachse 6 geschwenkt werden kann. Hierdurch kann die Rotationsachse 2 so mit der Geometrie des Bauteils 10, z. B. einem Bogenstück, rotatorisch nachgeführt werden. Dies kann insbesondere zur Herstellung von bogenförmig ausgebildeten Bauteilen 10 genutzt werden.

Weiterhin kann die Vorrichtung, wie in Figur 1 schematisch angedeutet und in Figur 2 genauer konstruktiv erkennbar, zusätzlich die zwei z.B. linearen Verfahrachsen 7 und 9 aufweisen, mit deren Hilfe die Werkstückauflage 1 ebenfalls relativ zu dem Druckkopf 3 verfahren werden kann. Dies ermöglicht die optimale Positionierung zwischen Druckkopf 3 und ggf. mittels der Schwenkachse 6 geschwenktem und um die Rotationsachse 2 rotierendem Bauteil 10.

Zusätzlich kann die Vorrichtung eine Schneideinheit 17 in Form eines Messers, eines Meißels, eines Fräsers oder einer Schleifeinheit aufweisen, die eine mit der Bewegung des Druckkopfs 3 gekoppelte Bewegung ausführt und mit deren Hilfe der aufgedruckte Bereich des Bauteils 10 einseitig oder beidseitig beschnitten oder ähnlich bearbeitet werden kann.

In der Figur 2 ist eine konstruktiv weitergehend durchgebildete Darstellung einer Vorrichtung gemäß Figur 1 mit einem radial linear und um die Rotationsachse 2 der Werkstückauflage 1 schwenkbar angeordneten Druckkopf 3 bei der Herstellung eines im wesentlichen kreisförmigen Querschnittes des Bauteils 10 mit zwei radial abstehenden Vorsprüngen 20 zu erkennen. Die Werkstückauflage 1 ist hierbei auf einem Gestell 11 mit linearen Führungen 14 angeordnet, auf denen zwei Lagerböcke 13 linear verschiebbar angeordnet sind und diese Lagerböcke 13 wiederum eine nur teilweise erkennbar unterhalb der Werkstückauflage 1 angeordnete Schwenkachse 6 drehbar lagern. Diese linearen Führungen 14 entsprechen der in Figur 1 mit 7 bezeichneten linearen Verstellachse, die Lagerböcke 13 mit der Drehlagerung 19 setzen die Schwenkachse 6 der Figur 1 konstruktiv um. Eine denkbare weitere lineare Achse 9 zur Verstellung der Werkstückauflage 1 kann unterhalb der Werkstückauflage 1 senkrecht zur Achse 7 angeordnet werden, ist aber hier nicht weiter zu erkennen.

Oberhalb der Werkstückauflage 1 und in nicht weiter dargestellter Weise ortsfest befestigt angeordnet ist ein Druckkopf 3 zu erkennen, dem über eine Zuführung 12 Material zum Drucken des Bauteils 10 zugeführt wird, das in dem Druckkopf 3 aufgeschmolzen und auf der Werkstückauflage 1 bzw. vorher abgelegten Schichten des Bauteils 10 abgelegt wird und dort erstarrt. Das Bauteil 10 ist hier in einem sehr frühen Stadium seiner Herstellung zu erkennen und weist einen im wesentlichen kreisförmigen Querschnitt des Bauteils 10 mit zwei radial abstehenden Vorsprüngen 20 auf. Das Bauteil 10 wächst dabei in bekannter Weise nach und nach in Richtung der Achse 5, die eine Verstellung des Druckkopfes 3 relativ zu der Werkstückauflage 1 erlaubt.

Weiterhin weist der Druckkopf 3 eine radiale Verstellung um eine lineare, radial zur Rotationsachse 2 angeordnete Achse 4 auf. Zusätzlich kann der Druckkopf 3 über einen Ausleger 21 um eine Schwenkachse 4' relativ zu der Werkstückauflage 1 herum verschwenkt werden, wobei die Schwenkachse 4' koaxial zu der Rotationsachse 2 der Werkstückauflage 1 angeordnet ist. Hierdurch kann der Druckkopf 3 eine zu der Rotation der Werkstückauflage 1 zumindest abschnittsweise synchrone Schwenkbewegung um die Schwenkachse 4' herum ausführen, so dass bei laufender und ggf. verlangsamter Rotation 15 der Werkstückauflage 1 um das zentrale Lager 18 die radialen Teile der Vorsprünge 20 gefertigt werden können.

Somit ergeben sich die Möglichkeiten zum Drucken z.B. entsprechend nachfolgend typisierter Bauteile 10, wobei die Schneideinheit 17 für jede der nachfolgend beschriebenen Anwendungen genutzt werden kann, um eine glatte Werkstückoberfläche ohne zusätzlichen Arbeitsgang zu erzeugen:
Ein rundes Rohr entsprechend den kreissymmetrischen Abschnitten des Bauteils 10 wird gedruckt, indem der Druckkopf 3 abgesehen von der Stellbewegung entlang der Achse 5 zur Anpassung der Schichtdicke bzw. Werkstückhöhe stillsteht und nur die Werkstückauflage 1 rotiert. Bei größeren Wanddicken des Rohres verstellt sich der Druckkopf 3 zwischen den einzelnen Rotationen der Werkstückauflage 1.

Ein im wesentlichen prismatisches Rohr 10 mit eckigem Querschnitt wie in Figur 6 angedeutet (z.B. dreieckig, quadratisch, rechteckig oder n-eckig) wird gedruckt, indem der Druckkopf 3 bei der Rotationsbewegung der Werkstückauflage 1 entsprechend der Querschnittskontur des Rohres 10 radial zur Rotationsachse 2 der Werkstückauflage 1 entlang der radialen Achse 4 hin und her verfahren wird.

Ein sich verjüngendes rundes oder eckiges Rohr 10 wird gedruckt, indem der Drucckopf 3 mit jeder Drehung der Werkstückauflage 1 entlang der radialen Achse 4 etwas weiter zur Rotationsachse 2 der Werkstückauflage 1 verfahren wird.

Ein Rohrbogen 10 wird analog hierzu gedruckt; jedoch wird zusätzlich bei jeder Umdrehung der Werkstückauflage 1 diese um einen kleinen Winkel um die Schwenkachse 6 geschwenkt. Der sich hierdurch während der Umdrehung verändernde Abstand zum Druckkopf 3 kann durch entsprechende Anpassung der Druckvolumens ausgeglichen werden (z.B. beträgt der Druckspalt bei 0°-Stellung der Werkstückauflage 1 etwa 0,1 mm, bei 180° 0,8 mm). Ein Ausgleich kann durch Anpassung der Drehzahl der Werkstückauflage 1 oder Materialvorschub des Druckkopfs 3 erfolgen.

Die zusätzliche Verfahrmöglichkeit entlang der linearen Achsen 7 und 9 bietet die Möglichkeit, das Bauteil 10 relativ zum Druckkopf 3 stets optimal zu positionieren, um unnötig lange Verfahrwege des Druckkopfes 3 zu vermeiden. Dies ist insbesondere nach der Neigung der Werkstückauflage 1 durch die Schwenkachse 6 erforderlich.

Zum Drucken radialer Konturen wird der Druckkopf 3 mit Hilfe der Schwenkachse 4' gemäß Figur 2 über einen gewissen Drehwinkel in Umfangsrichtung 15 der Werkstückaufnahme 1 mitgeführt.

Die Schneideinheit 17 kann beispielsweise direkt am Druckkopf 3 angeordnet sein, so dass ihre Relativposition zu diesem stets gleich bleibt.

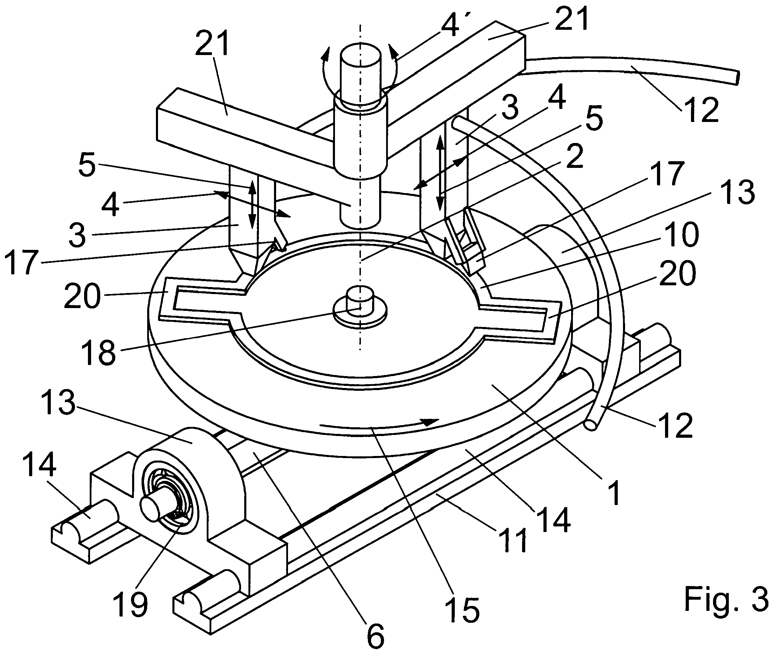

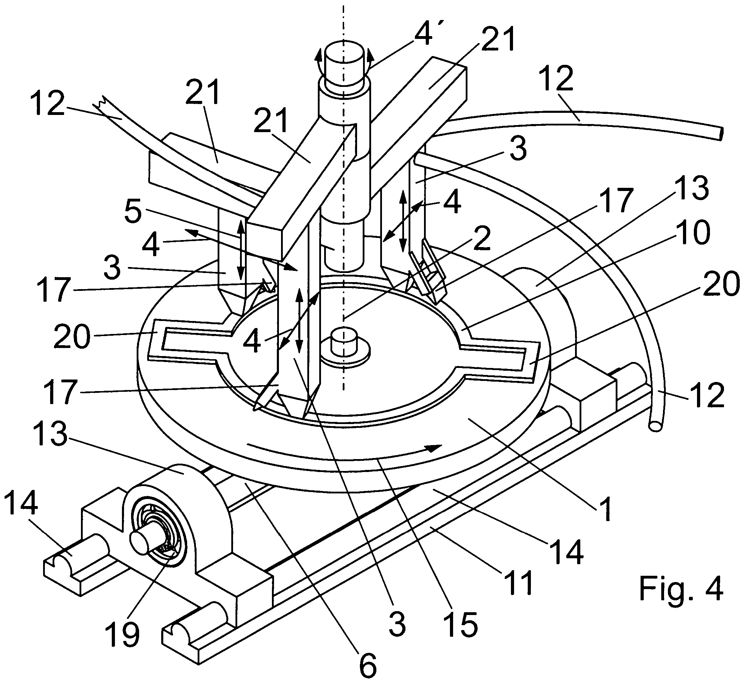

In den Figuren 3 und 4 sind Weiterbildungen der Vorrichtung gemäß der Figur 2 mit zwei bzw. drei Druckköpfen 3 zu erkennen, die in Umfangsrichtung 15 versetzt zueinander am Umfang der Werkstückauflage 1 angeordnet sind und gleichzeitig verschiedene Abschnitte des Bauteils 10 bearbeiten. Ansonsten gelten die vorstehend genannten Beschreibungen der Komponenten der Vorrichtung ebenfalls. Weitere ähnlich dem Druckkopf 3 angeordnete Druckköpfe 3, die eine gleichzeitige unabhängige Aufbringung mehrerer Materialbahnen in einer Ebene der Werkstückauflage 1 ermöglichen, können auch dazu genutzt werden, um z.B. eine große Wandstärke quasi gleichzeitig drucken zu können. Durch die zeitgleiche Nutzung mehrerer Druckköpfe 3 wird die Erstellung des Bauteils 10 wesentlich beschleunigt.

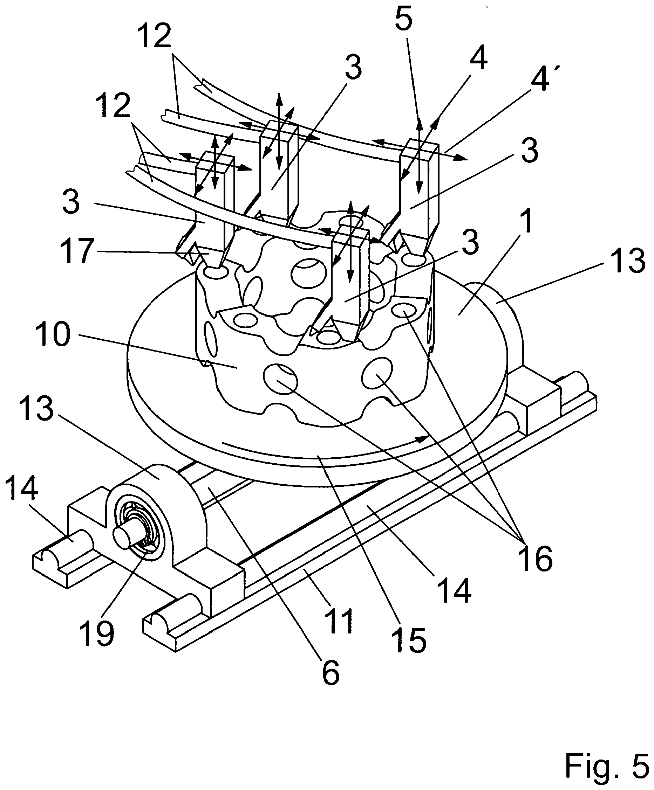

In der Figur 5 ist eine andere Ausgestaltung ,die nicht Teil der beanspruchten Erfindung ist, der Vorrichtung gemäß Figur 1 mit vier unabhängig kartesisch bewegbaren Druckköpfen 3 zur Herstellung eines dickwandigen rohrförmigen Querschnittes eines Bauteils 10 mit einer Reihe von Aussparungen 16 zu erkennen. Hierbei wird durch die Rotationsbewegung der Werkstückauflage 1 die kreisförmige Grundform des Bauteils 10 hergestellt, die Druckköpfe 3 führen dann wie dargestellt z.B. kartesisch unabhängig voneinander die Bewegungen zur Feinpositionierung der Druckköpfe 3 aus.

In der Figur 6 ist eine Ausgestaltung,die nicht Teil der beanspruchten Erfindung ist, der Vorrichtung gemäß Figur 1 mit einem Druckkopf 3 zur Herstellung eines rechteckig prismatischen Bauteils 10 durch Überlagerung der Rotationsbewegung 15 der Werkstückauflage 1 und der kartesischen Relativbewegung 4, 4' des Druckkopfes 3 zu erkennen, die eine konstruktive Gestaltung der grundsätzlichen Gestaltung gemäß Figur 1 entspricht.

Für die erfindungsgemäße Vorrichtung lassen sich folgende Eigenschaften und Vorteile nennen:
- Stark erhöhte Produktionsleistung durch simultanen Einsatz mehrerer Druccköpfe 3,
- Wählbares Verhältnis von Durchsatz (Beladung mehrerer Druckköpfe 3 mit gleichem Material) und Materialvielfalt (Beladung der Druckköpfe 3 mit jeweils unterschiedlichem Material)
- Hohe Auslastung des Systems auch bei vielen kleinen Bauteilen 10 (sonst für jedes Teil gesamter Drucker belegt)
- Kombinierbare Eigenschaften von Druckkopf 3 und des abzulegenden Materials in großer Anzahl (nach S.d.T. möglich, aber bei konventionellen Systemen nicht sinnvoll, da immer nur ein Druckkopf 3 arbeitet) an einem Bauteil 10 wie unterschiedliche Eigenschaften von Druckkopf 3 und des abzulegenden Materials. Beispiele für unterschiedliche Materialien:
   ∘ Flexibles Material
   ∘ Fluoreszierendes Material
   ∘ Leitfähiges Material
   ∘ Unterschiedlich farbiges Material
   ∘ Tribologisch optimiertes Material (Gleitlagerwerkstoffe)
   ∘ Hochfestes Material (CFK-Verstärkung)
- Keine Beschränkung auf Thermoplaste, da auch Pastenextruder für beispielsweise "Metall-Clay", Ton, Keramik oder andere pastenförmige Werkstoffe eingesetzt werden können.

### Sachnummernliste

- 1 -: Werkstückauflage
- 2 -: Rotationsachse
- 3 -: Druckkopf
- 4 -: Bewegungsachsen Druckkopf
- 5 -: Verstellachse Druckkopf
- 6 -: Schwenkachse Werkstückauflage
- 7 -: Verstellachse Werkstückauflage
- 8 -: Schneideinheit
- 9 -: Verstellachse Werkstückauflage
- 10 -: Bauteil
- 11 -: Gestell
- 12 -: Zuführung
- 13 -: Lagerbock
- 14 -: Linearführung
- 15 -: Drehbewegung Werkstückauflage
- 16 -: Aussparungen
- 17 -: Schneideinheit
- 18 -: Lagerung
- 19 -: Drehlager
- 20 -: Vorsprung
- 21 -: Ausleger

## Patentansprüche

1. Vorrichtung für dreidimensionale additive Druckoperationen insbesondere für großvolumige Bauteile (10), insbesondere nach dem Verfahren des Fused Deposition Molding, FDM, mit mindestens einem Druckkopf (3) und einer Werkstückauflage (1), wobei die Werkstückauflage (1) um mindestens eine Rotationsachse (2) bewegbar ist und der mindestens eine Druckkopf (3) entlang von zwei parallel zu der Ebene der Werkstückauflage (1) liegende Achsen (4, 4') relativ zu der Werkstückauflage (1) verfahrbar ist, wobei die erste Achse (4) im wesentlichen radial zu der mindestens einen Rotationsachse (2) der Werkstückauflage (1) verläuft,
**dadurch gekennzeichnet, dass**
die zweite Achse (4') um die Rotationsachse (2) der Werkstückauflage (1) schwenkend wirkt.

2. Vorrichtung gemäß Anspruch 1, wobei mehr als ein gleichzeitig arbeitender Druckkopf (3) vorgesehen ist,
durch die zeitgleich
verschiedene Abschnitte des gleichen Bauteils (10) oder zeitgleich ein oder mehrere weitere Bauteile (10) erzeugbar sind, die zeitgleich auf der gleichen Werkstückauflage (1) erzeugbar sind.

3. Vorrichtung gemäß einem der vorstehenden Ansprüche, wobei die relative radiale Bewegung der ersten Achse (4) des Drucckopfs (3) entweder kartesisch radial oder polar radial relativ zur Rotationsachse (2) der Werkstückauflage (1) ausführbar ist.

4. Vorrichtung gemäß einem der vorstehenden Ansprüche, wobei der Druckkopf durch die schwenkend um die Rotationsachse (2) der Werkstückauflage (1) relative Bewegung in Umfangsrichtung (15) der Werkstückauflage (1) zumindest abschnittsweise synchron zur Rotationsbewegung (15) der Werkstückauflage (1) mitführbar ist.

5. Vorrichtung gemäß einem der vorstehenden Ansprüche, wobei zwischen der Werkstückauflage (1) und dem mindestens einen Druckkopf (3) eine Relativbewegung (5) ausführbar ist, durch die der Abstand im wesentlichen parallel zur Rotationsachse (2) der Werkstückauflage (1) zwischen Werkstückauflage (1) und dem mindestens einen Druckkopf (3) an den Bearbeitungsfortschritt des Druckvorgangs anpassbar ist.

6. Vorrichtung gemäß Anspruch 5, wobei die Relativbewegung (5) zwischen Druckkopf (3) und Werkstückauflage (1) im wesentlichen parallel zur Rotationsachse (2) der Werkstückauflage (1) kontinuierlich oder schrittweise ausführbar ist.

7. Vorrichtung gemäß einem der vorstehenden Ansprüche, wobei die Rotationsachse (2) der Werkstückauflage (1) senkrecht zu der Ebene der Werkstückauflage (1) angeordnet ist.

8. Vorrichtung gemäß Anspruch 7, wobei die Rotationsachse (2) durch den Mittelpunkt der, vorzugsweise kreisförmig berandeten, Werkstückauflage (1) verläuft.

9. Vorrichtung gemäß einem der vorstehenden Ansprüche, wobei die Werkstückauflage (1) zusätzlich um eine Schwenkachse (6) schwenkbar ist, die vorzugsweise parallel zu der Ebene der Werkstückauflage (1) angeordnet ist und vorzugsweise die Rotationsachse (2) der Werkstückauflage (1) schneidet.

10. Vorrichtung gemäß einem der vorstehenden Ansprüche, wobei die Werkstückauflage (1) zusätzlich relativ zu dem mindestens einen Druckkopf (3) linear um mindestens eine, vorzugsweise zwei Achsen (7, 9) verfahrbar ist, die vorzugsweise im wesentlichen senkrecht zu der Rotationsachse (2) der Werkstückauflage (1) angeordnet sind.

11. Vorrichtung gemäß Anspruch 10, wobei zwei oder mehr gleichzeitig arbeitende Druckköpfe (3) derart zueinander angeordnet oder bewegbar sind, dass größere Wanddicken des herzustellenden Bauteils (10) durch parallele Ablage einzelner Materialstränge herstellbar sind.

12. Vorrichtung gemäß einem der vorstehenden Ansprüche, wobei zur Herstellung von im wesentlichen rohrförmigen Bauteilen (10) die Verfahrbewegungen der Vorrichtung in einer Art Rotationsmodus überwiegend von der Werkstückauflage (1) ausführbar sind.

13. Vorrichtung gemäß einem der Ansprüche 1 bis 11, wobei zur Herstellung von nicht vornehmlich rohrförmigen Bauteilen (10) und insbesondere kleinvolumiger Bauteile (10) die Verfahrbewegungen der Vorrichtung in einer Art kartesischem Modus überwiegend von dem mindestens einen Druckkopf (3) ausführbar sind, insbesondere bei stillstehender Werkstückauflage (1).

14. Vorrichtung gemäß einem der Ansprüche 1 bis 11, wobei zur Herstellung von Bauteilen (10) mittels mehrerer gleichzeitig arbeitender Druckköpfe (3) die Verfahrbewegungen der Vorrichtung in einer Art Oszillationsmodus der Werkstückauflage (1) mit hin- und hergehender Rotationsbewegung (15) ausführbar sind, um überlappende Abschnitte des Bauteils (10) durch unterschiedliche Druckköpfe (3) zu erzeugen.

15. Vorrichtung gemäß einem der vorstehenden Ansprüche, wobei mindestens eine Schneideinheit (17), aufweisend ein oder mehrere schneidende und/oder spanhebende Werkzeuge, entsprechend der Bewegung des Druckkopfs (3) so mit dem Druckkopf (3) mitführbar ist, vorzugsweise an dem Druckkopf (3) selbst angeordnet ist, dass die Schneideinheit (17) die Ränder des gedruckten Bereichs des Bauteils (10) auf ein vorgebbares Maß beschneidet.

16. Vorrichtung gemäß einem der vorstehenden Ansprüche, wobei die Abmessungen von Werkstückauflage und Bewegungseinrichtungen der Vorrichtung eine Herstellung von großvolumigen Bauteilen (10), vorzugsweise von Bauteilen (10) bis zu Abmessungen von 1,5 m × 1,5 m × 1,5 m ermöglichen.

## Claims

1. Device for three-dimensional additive printing operations, in particular for large-volume workpieces (10), in particular according to the method of fused deposition moulding, FDM, having at least one print head (3) and a workpiece support (1), wherein the workpiece support (1) is movable about at least one axis of rotation (2) and the at least one print head (3) is movable relative to the workpiece support (1) along two axes (4, 4') lying parallel to the plane of the workpiece support (1), wherein the first axis (4) extends substantially radially to the at least one axis of rotation (2) of the workpiece support (1),
**characterised in that**
the second axis (4') swivels around the axis of rotation (2) of the workpiece support (1).

2. Device according to claim 1, **wherein** more than one simultaneously operating print head (3) is provided, by means of which different sections of the same workpiece (10) or one or more further workpieces (10) can be produced simultaneously, which can be produced simultaneously on the same workpiece support (1).

3. Device according to one of the preceding claims, **wherein** the relative radial movement of the first axis (4) of the print head (3) can be executed either cartesian radial or polar radial relative to the axis of rotation (2) of the workpiece support (1).

4. Device according to one of the preceding claims, **wherein** the print head (3) can be carried along by the relative movement in the circumferential direction (15) of the workpiece support (1), at least in sections, synchronously with the rotational movement (15) of the workpiece support (1) by pivoting around the axis of rotation (2) of the workpiece support (1).

5. Device according to one of the preceding claims, **wherein** a relative movement (5) can be executed between the workpiece support (1) and the at least one print head (3), by means of which the distance essentially parallel to the axis of rotation (2) of the workpiece support (1) between the workpiece support (1) and the at least one print head (3) can be adapted to the processing progress of the printing operation.

6. Device according to claim 5, **wherein** the relative movement (5) between the print head (3) and the workpiece support (1) is executable substantially parallel to the axis of rotation (2) of the workpiece support (1) continuously or stepwise.

7. Device according to one of the preceding claims, **wherein** the axis of rotation (2) of the workpiece support (1) is arranged perpendicular to the plane of the workpiece support (1).

8. Device according to claim 7, **wherein** the axis of rotation (2) runs through the centre point of the workpiece support (1), which preferably has a circular edge.

9. Device according to one of the preceding claims, **wherein** the workpiece support (1) is additionally pivotable about a pivot axis (6) which is preferably arranged parallel to the plane of the workpiece support (1) and preferably intersects the axis of rotation (2) of the workpiece support (1).

10. Device according to any one of the preceding claims, **wherein** the workpiece support (1) is additionally linearly movable relative to the at least one print head (3) along at least one, preferably two axes (7, 9), which are preferably arranged substantially perpendicular to the axis of rotation (2) of the workpiece support (1).

11. Device according to claim 10, **wherein** two or more simultaneously operating print heads (3) are arranged or movable relative to one another in such a way that greater wall thicknesses of the workpiece (10) to be manufactured can be produced by parallel deposition of individual strands of material.

12. Device according to one of the preceding claims, **wherein**, for the production of substantially tubular workpieces (10), the traversing movements of the device can be carried out in a kind of rotational mode predominantly by the workpiece support (1).

13. Device according to one of the claims 1 to 11, **wherein** for the production of not primarily tubular workpieces (10) and in particular small-volume workpieces (10), the traversing movements of the device can be executed in a kind of cartesian mode predominantly by the at least one print head (3), in particular when the workpiece support (1) is stationary.

14. Device according to one of the claims 1 to 11, **wherein**, for the production of workpieces (10) by means of several simultaneously operating print heads (3), the traversing movements of the device can be executed in a kind of oscillation mode of the workpiece support (1) with reciprocating rotational movement (15) in order to produce overlapping sections of the workpiece (10) by different print heads (3).

15. Device according to one of the preceding claims, **wherein** at least one cutting unit (17), comprising one or more cutting and/or macining tools, can be carried along with the print head (3) in accordance with the movement of the print head (3), preferably arranged on the print head (3) itself, in such a way that the cutting unit (17) cuts the edges of the printed area of the workpiece (10) to a predeterminable dimension.

16. Device according to one of the preceding claims, **wherein** the dimensions of the workpiece support (1) and moving devices of the device enable the production of large-volume workpieces (10), preferably of workpieces (10) up to dimensions of 1.5 m × 1.5 m × 1.5 m.

## Revendications

1. Dispositif pour des opérations d'impression additives tridimensionnelles en particulier pour des composants (10) de grand volume, en particulier selon le procédé FDM (Fused Deposition Molding, de modélisation par dépôt de fil en fusion), avec au moins une tête d'impression (3) et un support de pièce (1), dans lequel le support de pièce (1) peut être déplacé autour d'au moins un axe de rotation (2) et l'au moins une tête d'impression (3) peut être déplacée par rapport au support de pièce (1) le long de deux axes (4, 4') situés de manière parallèle par rapport au plan du support de pièce (1), dans lequel le premier axe (4) s'étend sensiblement de manière radiale par rapport à l'au moins un axe de rotation (2) du support de pièce (1),
**caractérisé en ce que**
le deuxième axe (4') agit par pivotement autour de l'axe de rotation (2) du support de pièce (1).

2. Dispositif selon la revendication 1, dans lequel
est prévue plus d'une tête d'impression (3) fonctionnant simultanément, qui permet de produire dans le même temps différentes sections du même composant (10) ou dans le même temps un ou plusieurs autres composants (10) qui peuvent être produits dans le même temps sur le même support de pièce (1),

3. Dispositif selon l'une quelconque des revendications précédentes, dans lequel le déplacement radial relatif du premier axe (4) de la tête d'impression (3) peut être exécuté soit radialement de manière cartésienne soit radialement de manière polaire par rapport à l'axe de rotation (2) du support de pièce (1).

4. Dispositif selon l'une quelconque des revendications précédentes, dans lequel la tête d'impression peut être entraînée par un guidage au moins par endroits de manière synchrone par rapport au déplacement par rotation (15) du support de pièce (1) dans le sens périphérique (15) du support de pièce (1) par le déplacement relatif par pivotement autour de l'axe de rotation (2) du support de pièce (1).

5. Dispositif selon l'une quelconque des revendications précédentes, dans lequel peut être exécuté entre le support de pièce (1) et l'au moins une tête d'impression (3) un déplacement relatif (5), par lequel la distance sensiblement de manière parallèle par rapport à l'axe de rotation (2) du support de pièce (1) entre le support de pièce (1) et l'au moins une tête d'impression (3) peut être adaptée à la progression d'usinage de l'opération d'impression.

6. Dispositif selon la revendication 5, dans lequel
le déplacement relatif (5) entre la tête d'impression (3) et le support de pièce (1) peut être exécuté en continu ou progressivement sensiblement de manière parallèle par rapport à l'axe de rotation (2) du support de pièce (1).

7. Dispositif selon l'une quelconque des revendications précédentes, dans lequel
l'axe de rotation (2) du support de pièce (1) est disposé de manière perpendiculaire par rapport au plan du support de pièce (1).

8. Dispositif selon la revendication 7, dans lequel l'axe de rotation (2) s'étend à travers le point central du support de pièce (1) présentant une bordure de préférence de forme circulaire.

9. Dispositif selon l'une quelconque des revendications précédentes, dans lequel
le support de pièce (1) peut être pivoté en supplément autour d'un axe de pivotement (6), qui est disposé sensiblement de manière parallèle par rapport au plan du support de pièce (1) et coupe de préférence l'axe de rotation (2) du support de pièce (1).

10. Dispositif selon l'une quelconque des revendications précédentes, dans lequel
le support de pièce (1) peut être déplacé en supplément par rapport à l'au moins une tête d'impression (3) de manière linéaire autour d'au moins un, de préférence deux axes (7, 9), qui sont disposés de préférence sensiblement de manière perpendiculaire par rapport à l'axe de rotation (2) du support de pièce (1).

11. Dispositif selon la revendication 10, dans lequel
deux têtes d'impression (3) ou plus fonctionnant simultanément sont disposées ou peuvent être déplacées l'une par rapport à l'autre de telle manière que des épaisseurs de paroi plus grandes du composant (10) à fabriquer peuvent être fabriquées par le dépôt parallèle de divers boudins de matière.

12. Dispositif selon l'une quelconque des revendications précédentes, dans lequel
les mouvements de déplacement du dispositif peuvent être exécutés dans un type de mode de rotation majoritairement par le support de pièce (1) pour la fabrication de composants (10) sensiblement de forme tubulaire.

13. Dispositif selon l'une quelconque des revendications 1 à 11, dans lequel
les mouvements de déplacement du dispositif peuvent être exécutés dans un type de mode cartésien majoritairement par l'au moins une tête d'impression (3) pour la fabrication de composants (10) non principalement de forme tubulaire, en particulier lorsque le support de pièce (1) est immobile.

14. Dispositif selon l'une quelconque des revendications 1 à 11, dans lequel
les mouvements de déplacement du dispositif peuvent être exécutés dans un type de mode d'oscillation du support de pièce (1) avec un déplacement par rotation en va-et-vient (15) au moyen de plusieurs têtes d'impression (3) fonctionnant simultanément pour la fabrication de composants (10) pour produire des sections de chevauchement du composant (10) par différentes têtes d'impression (3).

15. Dispositif selon l'une quelconque des revendications précédentes, dans lequel
au moins une unité de coupe (17) présentant un ou plusieurs outils de coupe et/ou d'enlèvement de copeaux, peut être entraînée par guidage de telle sorte avec la tête d'impression (3) conformément au déplacement de la tête d'impression (3), de préférence est disposée sur la tête d'impression (3) elle-même que l'unité de coupe (17) découpe les bords de la zone imprimée du composant (10) sur une mesure pouvant être spécifiée.

16. Dispositif selon l'une quelconque des revendications précédentes, dans lequel
les dimensions du support de pièce et des systèmes de déplacement du dispositif permettent une fabrication de composants (10) de grand volume, de préférence de composants (10) jusqu'à des dimensions de 1,5 m x 1,5 m x 1,5 m.
